# EUROPEAN PATENT APPLICATION

(11) **EP 4 841 564 A1**
(43) Date of publication of application: **18.11.2026**
(21) Application number: 25176399.1
(22) Date of filing: 14.05.2025
(51) Int. Cl.: G06T 7/33

(54) **METHOD FOR DETERMINING, IN A SECOND MEDICAL IMAGE, A LOCATION OF A GIVEN FEATURE PRESENT IN A FIRST MEDICAL IMAGE**

(71) Applicant: Siemens Healthineers AG, 91301 Forchheim (DE)
(72) Inventor: YEREBAKAN, Halid, Carmel, IN, 46033 (US); HERMOSILLO VALADEZ, Gerardo, West Chester, PA, 19382 (US)
(74) Representative: HKW Intellectual Property PartG mbB

(57) **Abstract**

A computer-implemented method for determining, in a second medical image (MI-2), a location (L5', L5", L6', L6") of a given feature (402, 406) present in a first medical image (MI-1), the method comprising the steps:
a) determining (S305) location pairs (L1, L1'-L4, L4') of corresponding locations in the first and second medical image (MI-1, MI-2);
b) determining (S306) a transformation based on the location pairs (L1, L1'-L4, L4');
c) determining (S310), in the second medical image (MI-2), the location (L5', L6') of the given feature (402, 406) by applying the transformation to a location (L5, L6) of the given feature (402, 406) in the first medical image (MI-1).

## Description

The present invention relates to a computer-implemented method for determining, in a second medical image, a location of a given feature present in a first medical image, a device, a system and a computer program product.

Comparison of medical images occurs frequently in clinical settings. For example, in clinical decision making, the progression of a patient's disease over time can be as, if not more, important than the current status of that disease. In order to help assess the progression of a patient's disease, medical imaging, e.g., radiology, of a region of the patient's body including the disease may be performed at different points in time, for example several times over the course of a year. The resulting images may be compared, for example by a physician, in order to track the disease over time and hence assess the progression of the disease.

However, differences in the images, for example differences resulting from the precise positioning of the patient relative to the imaging equipment when the images are captured, and/or the imaging modality or protocols according to which the images are captured, can make it difficult to locate a given feature (e.g., a particular tumor) represented in one image in other ones of the images.

Image registration and landmark detection are existing techniques that can help address this problem by attempting to spatially align different images (or imaging data sets) with one another.

In image registration techniques, different sets of imaging data are transformed into one coordinate system. In a known image registration technique, a cost function for a given voxel-to-voxel mapping of one image to another image in voxel space is calculated, and the mapping is adjusted so as to minimize the cost function. As a result, the location of a given feature represented by the two images should be the same in the common coordinate system. Typically, the ability of this technique to perform accurately and/or reliably is limited to cases where the two images both, as a whole, represent the same part or very similar parts of the patient's body and/or cases where the same or similar imaging modality or protocol is used. Moreover, as it is based on a voxel-to-voxel mapping of one image to another image, this technique is computationally demanding, and hence has a limited ability to provide real-time or near real time results without extensive pre-processing of the imaging data and/or without use of large computational resources.

In landmark detection techniques, a landmark detector first identifies well known locations ("landmarks") in the body by applying trained classifiers to both images to be aligned. The identified landmarks are mapped between the two images. The images can be broadly spatially aligned according to the landmarks, and as a result a given feature represented in the two images should also be broadly aligned. However, this technique relies on the images containing landmarks that can be detected by the trained classifiers. Moreover, the training of the classifiers to identify landmarks in images can be computationally demanding, and requires expert annotation of a large number of images to form a training data set, which is time consuming.

Another technique known as point matching is described in US 2023/0005136 A1. According to the disclosed method a first descriptor for a first location in first medical imaging data at which a given feature is present is obtained. A second descriptor for each of a plurality of candidate second locations in second medical imaging data is obtained. For each of the plurality of candidate second locations, a similarity metric is calculated. The similarity metric indicates a degree of similarity between the first descriptor and the second descriptor for the candidate second location. A candidate second location is selected from among the plurality of candidate second locations based on the calculated similarity metrics. The location at which the given feature is represented in the second medical imaging data is determined based on the selected candidate second location.

Point matching has been demonstrated to be useful for comparing findings between multiple time points in imaging studies of one patient, as well as for finding corresponding anatomical locations in a reference atlas as described in US 2024/0363230 A1. However, there may be an inherent problem of rotation sensitivity in point matching.

It is one object of the present invention to provide an improved approach for determining, in a second medical image, a location of a given feature present in a first medical image.

According to a first aspect, there is provided a computer-implemented method for determining, in a second medical image, a location of a given feature present in a first medical image, the method comprising the steps:
a) determining location pairs of corresponding locations in the first and second medical image;
b) determining a transformation based on the location pairs;
c) determining, in the second medical image, the location of the given feature by applying the transformation to a location of the given feature in the first medical image.

One advantage of this method is speed. The initial cost of defining multiple location (point) pairs is relatively high. However, afterwards the matching operation is quick for subsequent locations (points).

A medical image may comprise an organ or portion thereof. An organ is to be understood as a collection of tissue joined in a structural unit to serve a common function. The organ may be a human organ. The organ may be any one of the following, for example: intestines, skeleton, kidneys, gall bladder, liver, muscles, arteries, heart, larynx, pharynx, brain, lymph nodes, lungs, spleen, bone or bone marrow, stomach, veins, pancreas, bladder or any blood vessel. The organ or portion or tissue may include or be affected by a tumor, disease or other finding.

The medical image may be captured by and received from a medical imaging unit, the medical imaging unit may include, for example, but not limited to, a magnetic resonance imaging device, a computer tomography device, an X-ray imaging device, an ultrasound imaging device, etc. The medical image may be three-dimensional (3D) and/or related to a volume. The 3D medical image may be made up of a number of slices, i.e., 2D (two-dimensional) medical images. The 2D medical images may be captured by and received from the medical imaging unit mentioned above. The 2D medical images may then be assembled to form the volumetric medical image. On the other hand, the medical image captured by and received from the medical imaging unit may be 2D only.

Herein, a voxel represents a value in three-dimensional space, whereas a pixel represents a value in two-dimensional space. The pixels or voxels may or may not have their position, i.e., their coordinates, explicitly encoded with their values. Instead, the position of a pixel or voxel may be inferred based upon its position relative to other pixels or voxels (i.e., is positioned in the data structure that makes up a single 2D or 3D (volumetric) image). The voxels may be arranged on a 3D grid, the pixels on a 2D grid. The 2D medical image may, for example, be in the form of an array of pixels. The volumetric medical image may comprise an array of voxels. The pixels of a number of 2D medical images making up a volumetric medical image are also presently referred to as voxels. The pixels or voxels may be representative of intensity, absorption or other parameters as a function of a three-dimensional position, and may, for example, be obtained by a suitable processing of measurement signals obtained by one or more of the above-mentioned medical imaging units.

The feature may include a finding such as a tumor, nodule, lesion or other abnormality.

According to an embodiment, the method further comprises:
d) selecting a portion of the second medical image based on the location determined in step c); and
e) determining a refined location pair based on the selected portion.

Thereby, the finer search is limited to a portion of the second medical image, making the method faster.

According to an embodiment, the transformation is updated based on the refined location pair, and wherein step c) is repeated based on the updated transformation.

By updating the transformation, the method provides more accurate location matches over time.

According to an embodiment,
in step a), a similarity metric is calculated for determining each location pair, and/or
in step d) a similarity metric is calculated for determining the refined location pair.

This provides for simple point matching between the first and second medical image.

According to an embodiment, step a) comprises, for each location pair, performing the steps:
obtaining a first descriptor for a first location in one of the first or second medical image;
obtaining a second descriptor for each of a plurality of candidate locations in the other of the first or second medical image;
calculating, for each candidate location, a similarity metric between each second descriptor and the first descriptor;
selecting a candidate location based on the calculated similarity metrics; and
determining a location pair based on the first location and the selected candidate location.

This provides for an efficient implementation of point matching.

In medical imaging, a descriptor refers to a quantifiable feature or characteristic that represents specific aspects of an image, such as texture, shape, intensity, or edges. Descriptors are used to capture key details in the image that can aid in analysis, classification, or comparison. These features help in tasks like identifying organs, detecting abnormalities, segmenting regions, and supporting diagnosis. Descriptors can be low-level (e.g., pixel intensity, gradients) or high-level (e.g., shape and texture patterns). Common examples include histograms of pixel intensities, texture descriptors like Gabor filters, or more advanced feature representations learned through machine learning models like Convolutional Neural Networks (CNNs).

According to an embodiment, step d) comprises performing the steps:
obtaining a first descriptor for a first location in the first medical image;
obtaining a second descriptor for each of a plurality of candidate locations in the second medical image, each candidate location being selected from the portion selected in step d);
calculating, for each candidate location, a similarity metric between each second descriptor and the first descriptor;
selecting a candidate location based on the calculated similarity metrics; and
determining the refined location pair based on the first location and the selected candidate location.

By selecting each candidate location from the portion selected in step d), the method executes faster (similar points are found faster).

According to an embodiment,
in step a), a regression model is used for determining each location pair, and/or
in step d) a regression model is used for determining the refined location pair.

For example, the regression model is implemented as linear or polynomial regression model. In one embodiment, it is implemented as a least square fit.

According to an embodiment, step a) comprises, for each location pair, performing the steps:
obtaining a first descriptor for a first location in one of the first or second medical image;
applying a regression model to the first descriptor to obtain a first normalized location referring to a reference coordinate system;
obtaining a second descriptor for each of a plurality of candidate locations in the other of the first or second medical image;
applying a regression model to each second descriptor to obtain a respective second normalized location referring to the reference coordinate system;
selecting a candidate location based on a comparison of the second normalized locations to the first normalized location; and
determining a location pair based on the first location and the selected candidate location.

The reference coordinate system may be implemented as a human atlas (with its own reference frame and thus does not rely on the existing world reference frame). This is another efficient way of finding matching locations in the first and second medical image.

According to an embodiment, step d) comprises performing the steps:
obtaining a first descriptor for a first location in the first medical image;
applying a regression model to the first descriptor to obtain a first normalized location referring to a reference coordinate system;
obtaining a second descriptor for each of a plurality of candidate locations in the second medical image, each candidate location being selected from the portion selected in step d);
applying a regression model to each second descriptor to obtain a respective second normalized location referring to the reference coordinate system;
selecting a candidate location based on a comparison of the second normalized locations to the first normalized location; and
determining a location pair based on the first location and the selected candidate location.

By selecting each candidate location from the portion selected in step d), the method executes faster (matching points are found faster).

According to an alternative embodiment, step a) comprises, for each location pair, performing the steps:
a1) obtaining a first descriptor for a first location in one of the first or second medical image;
b1) applying a regression model to the first descriptor to obtain a first normalized location referring to a reference coordinate system;
c1) obtaining a second descriptor for a second location in the other of the first or second medical image;
d1) applying a regression model to the second descriptor to obtain a second normalized location referring to the reference coordinate system;
e1) comparing the second normalized location to the first normalized location and, depending on the comparison, repeating steps c1) to e1) for a newly selected second location; and
f1) determining a location pair based on the first location and the second or newly selected second location.

In this embodiment, rather than using multiple second candidate locations at once, second locations are analyzed sequentially, which may be faster in some cases. For example, in step e1), in the step of comparing, a distance between the first and the second normalized location is calculated. As long as said distance exceeds a defined threshold (e.g., 1 mm), the steps c1) to e1) are repeated for a respective newly selected second location for each iteration. For example, the new location is estimated (selected) in each iteration based on the previous second location(s) and possibly one or more other factors.

According to an alternative embodiment, step d) comprises performing the steps:
a2) obtaining a first descriptor for a first location in the first medical image;
b2) applying a regression model to the first descriptor to obtain a first normalized location referring to a reference coordinate system;
c2) obtaining a second descriptor for a second location in the second medical image, the second location being selected from the portion selected in step d);
d2) applying a regression model to the second descriptor to obtain a second normalized location referring to the reference coordinate system;
e2) comparing the second normalized location to the first normalized location and, depending on the comparison, repeating steps c2) to e2) for a newly selected second location; and
f2) determining a location pair based on the first location and the second or newly selected second location.

By selecting each candidate location from the portion selected in step d), the method executes faster (matching points are found faster).

According to an embodiment, the regression model is a trained neural network.

A "neural network" herein refers to an artificial neural network which is built up like a biological neural net, e.g., a human brain. In particular, an artificial neural network comprises an input layer and an output layer. It may further comprise a plurality of layers between the input and output layer. Each layer comprises at least one, preferably a plurality of nodes. Each node may be understood as a biological processing unit, e.g., a neuron. In other words, each neuron corresponds to an operation applied to input data. Nodes of one layer may be interconnected by edges or connections to nodes of other layers, in particular, by directed edges or connections. These edges or connections define the data flow between the nodes of the network. In particular, the edges or connections are equipped with a parameter, wherein the parameter is often denoted as "weight". This parameter can regulate the importance of the output of a first node to the input of a second node, wherein the first node and the second node are connected by an edge.

Neural networks can be trained. "Self-supervised" learning (SSL) is a paradigm in machine learning where a model is trained on a task using the data itself to generate supervisory signals, rather than relying on external labels provided by humans. In the context of neural networks, self-supervised learning aims to leverage inherent structures or relationships within the input data to create meaningful training signals. SSL tasks are designed so that solving it requires capturing essential features or relationships in the data. The input data is typically augmented or transformed in a way that creates pairs of related samples. One sample serves as the input, and the other is used to formulate the supervisory signal. This augmentation can involve introducing noise, cropping, rotation, or other transformations. "Supervised" learning of a neural network is based on known pairs of input and output values, wherein the known input values are used as inputs of the neural network, and wherein the corresponding output value of the neural network is compared to the corresponding known output value. The artificial neural network independently learns and adapts the weights for the individual nodes until the output values of the last network layer sufficiently correspond to the known output values according to the training data. For convolutional neural networks, this technique is also called "deep learning".

According to an embodiment, the transformation includes a linear transformation or a non-linear transformation, e.g., a spline function.

This may reduce matching errors due to rotation issues during point matching, in particular during step e).

According to an embodiment, in step b):
location pairs are selected based on the location of the given feature; and
the transformation in step b) is determined based on the selected location pairs.

In this manner, a transformation is used which may be more relevant to the query point (feature).

According to a further aspect, there is provided a computer-implemented device for determining, in a second medical image, a location of a given feature present in a first medical image, the computer-implemented device comprising:
one or more processing units,
a receiving unit which is configured to receive one or more medical images captured by a medical imaging unit, and
a memory coupled to the one or more processing units, the memory comprising a module configured to perform the method steps as described above.

According to a further aspect, there is provided system for determining, in a second medical image, a location of a given feature present in a first medical image, the system comprising:
one or more servers,
a medical imaging unit coupled to the one or more servers,
the one or more servers comprising instructions, which when executed causes the one or more servers to perform the method steps as described above.

According to a further aspect, there is provided a computer program product comprising machine readable instructions, that when executed by one or more processing units, cause the one or more processing units to perform the method steps as described above.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The features, advantages and embodiments described with respect to the first aspect equally applies to the further aspects, and vice versa.

"A" is to be understood as non-limiting to a single element. Rather, one or more elements may be provided, if not explicitly stated otherwise. Further, "a", "b" etc. in steps a), step b) etc. is not defining a specific order. Rather, the steps may be interchanged as deemed fit by the skilled person.

The use of "first", "second", etc. element herein merely serves as a means to refer to the various elements. The "first", "second", etc. element may be the same or different elements, except where there is an indication to the contrary. Also, it is permissible to change these references: e.g., the "third" may be changed to the "second", etc. Also, the presence of a "first" element does not require a "second" element to be present. Even more, the presence of a "first" element and a "third" element does not require a "second" element to be present.

Where it says "based on" herein, it can also be phrased "depending on" or "as a function of".

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- FIG. 1: illustrates a block diagram of a client-server architecture embodying a system for determining, in a second medical image, a location of a given feature present in a first medical image;
- FIG. 2: illustrates a block diagram of a data processing system embodying a device for determining, in a second medical image, a location of a given feature present in a first medical image;
- FIG. 3: illustrates a flowchart of an embodiment of a computer-implemented method for determining, in a second medical image, a location of a given feature present in a first medical image;
- FIG. 4: illustrates the first and second medical image, as well as the first image before and after registering the same to the target image;
- FIG. 5: illustrates a list of location pairs of corresponding locations in the first and second image;
- FIG. 6: illustrates a flowchart of method steps for determining location pairs of corresponding locations in the first and second medical image, according to a first embodiment (using point matching);
- FIG. 7: illustrates a flowchart of method steps for determining a refined location pair of corresponding locations in the first and second medical image, according to a first embodiment (using point matching);
- FIG. 8: illustrates the first medical image and a descriptor according to an embodiment;
- FIG. 9: illustrates voxels in the medical image of Fig. 8;
- FIG. 10: illustrates a flowchart of method steps for determining location pairs of corresponding locations in the first and second medical image, according to a second embodiment (using a body atlas);
- FIG. 11: illustrates a flowchart of method steps for determining a refined location pair of corresponding locations in the first and second medical image, according to a second embodiment (using a body atlas); and
- FIG. 12: illustrates a regression model applied to the first and second medical image.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

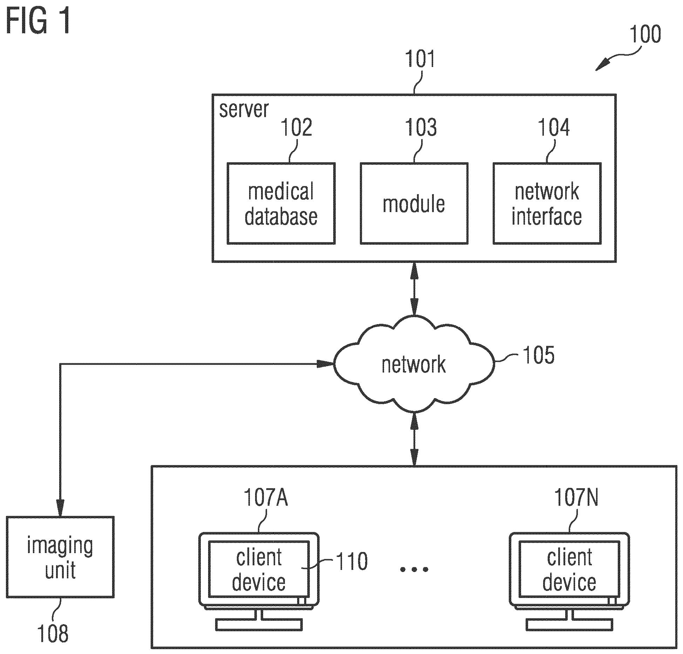

FIG. 1 provides an illustration of a block diagram of a client-server architecture embodying a system for determining, in a second medical image, a location of a given feature present in a first medical image. The client-server architecture 100 comprises a server 101 and a plurality of client devices 107A-N. Each of the client devices 107A-N is connected to the server 101 via a network 105, for example, local area network (LAN), wide area network (WAN), WiFi, etc. In one embodiment, the server 101 is deployed in a cloud computing environment. As used herein, "cloud computing environment" refers to a processing environment comprising configurable physical and logical computing resources, for example, networks, servers, storage, applications, services, etc., and data distributed over the network 105, for example, the internet. The cloud computing environment provides on-demand network access to a shared pool of the configurable physical and logical computing resources. The server 101 may include a medical database 102 that comprises medical images related to a plurality of patients that is maintained by a healthcare service provider. In an embodiment, the medical database 102 comprises medical images captured by an imaging unit 108. The server 101 may include a module 103 that is configured to perform the method steps as described hereinafter. It is preferred that method steps are executed at the same location where the image data (medical images MI-1, MI-2 mentioned below) is stored since, if the image data was transferred first, before processing, this would take time. So, the module 103 may be executed in the server 101 or any other processing system, desktop computer, etc.

The client devices 107A-N are user devices, used by users, for example, medical personnel such as a radiologist, pathologist, physician, etc. In an embodiment, the user device 107A-N may be used by the user to receive volumetric (3D) or 2D medical images associated with a patient. The data can be accessed by the user via a graphical user interface of an end user web application on the user device 107A-N. In another embodiment, a request may be sent to the server 101 to access the medical images associated with a patient via the network 105.

The imaging unit 108 may be connected to the server 101 through the network 105. The imaging unit 108 may be a medical imaging unit 108 capable of acquiring a plurality of 2D or volumetric medical images. The medical imaging unit 108 may be, for example, a scanner unit such as a magnetic resonance imaging unit, computed tomography imaging unit, an X-ray fluoroscopy imaging unit, an ultrasound imaging unit, etc.

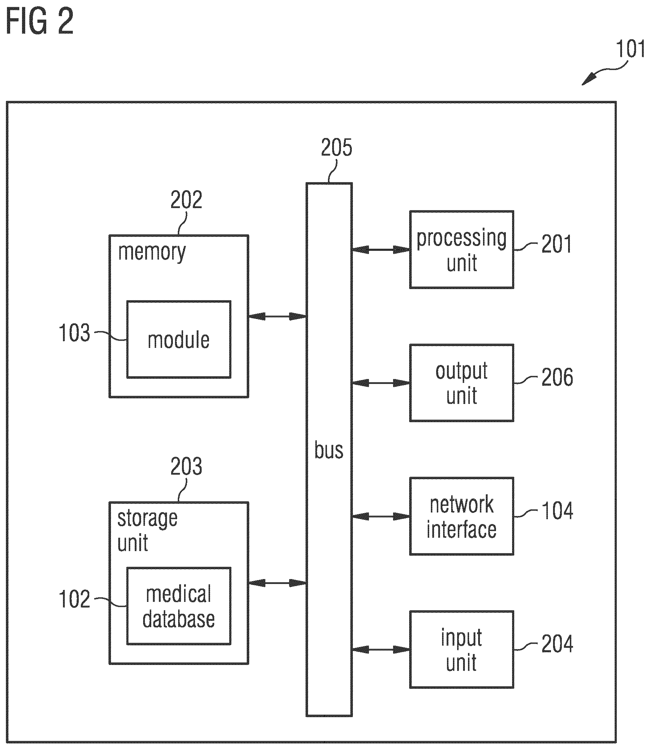

FIG. 2 is a block diagram of a data processing system 101 for determining, in a second medical image, a location of a given feature present in a first medical image, configured to perform the processes as described herein. It is appreciated that the server 101 is an exemplary implementation of the system in FIG. 2. In FIG. 2, said data processing system 101 comprises a processing unit 201, memory 202, a storage unit 203, an input unit 204, an output unit 206, a bus 205, and a network interface 104.

The processing unit 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 101 may also include embedded controllers, such as generic or programmable logic devices or arrays, application specific integrated circuits, single-chip computers, and the like.

The memory 202 may be volatile or non-volatile memory. The memory 202 may be coupled for communication with said processing unit 201. The processing unit 201 may execute instructions and/or code stored in the memory 202. A variety of computer-readable storage media may be stored in and accessed from said memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 201 comprises a module 103 stored in the form of machine-readable instructions on any of said above-mentioned storage media and may be in communication with and executed by the processing unit 201. When executed by the processing unit 201, the module 103 causes the processing unit 201 to execute the method steps as elaborated upon in detail in the following.

The storage unit 203 may be a non-transitory storage medium which stores the medical database 102. The input unit 204 may include input means such as keypad, touch-sensitive display, camera (such as a camera receiving gesture-based inputs), a port etc. capable of providing input signal such as a mouse input signal or a camera input signal. The bus 205 acts as interconnect between the processor 201, the memory 202, the storage unit 203, the input unit 204, the output unit 206 and the network interface 104. The 2D or volumetric medical images may be read into the medical database 102 via the network interface 104 or the input unit 204, for example.

Those of ordinary skilled in the art will appreciate that said hardware depicted in FIG. 1 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. Said depicted example is provided for the purpose of explanation only and is not meant to imply architectural limitations with respect to the present disclosure.

A data processing system 101 in accordance with an embodiment of the present disclosure may comprise an operating system employing a graphical user interface (GUI). Said operating system permits multiple display windows to be presented in the graphical user interface simultaneously with each display window providing an interface to a different application or to a different instance of the same application. A cursor in said graphical user interface may be manipulated by a user through a pointing device. The position of the cursor may be changed and/or an event such as clicking a mouse button, generated to actuate a desired response.

One of various commercial operating systems, such as a version of Microsoft Windows^{™}, a product of Microsoft Corporation located in Redmond, Washington may be employed if suitably modified. Said operating system is modified or created in accordance with the present disclosure as described. Disclosed embodiments provide systems and methods for processing medical images.

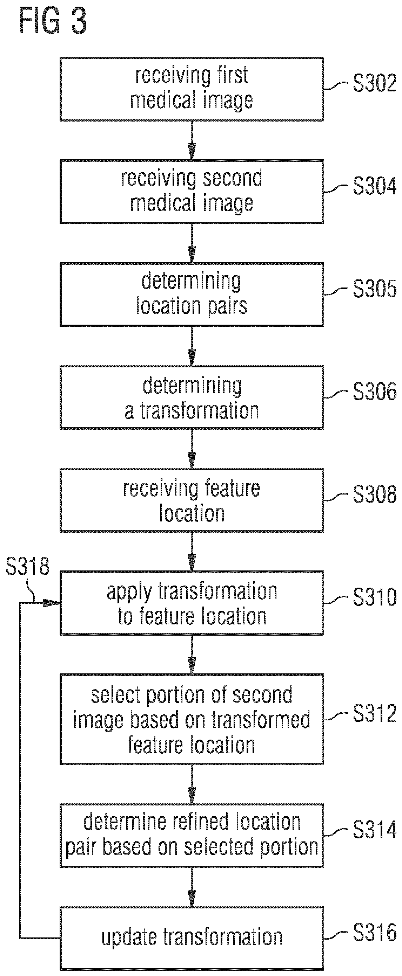

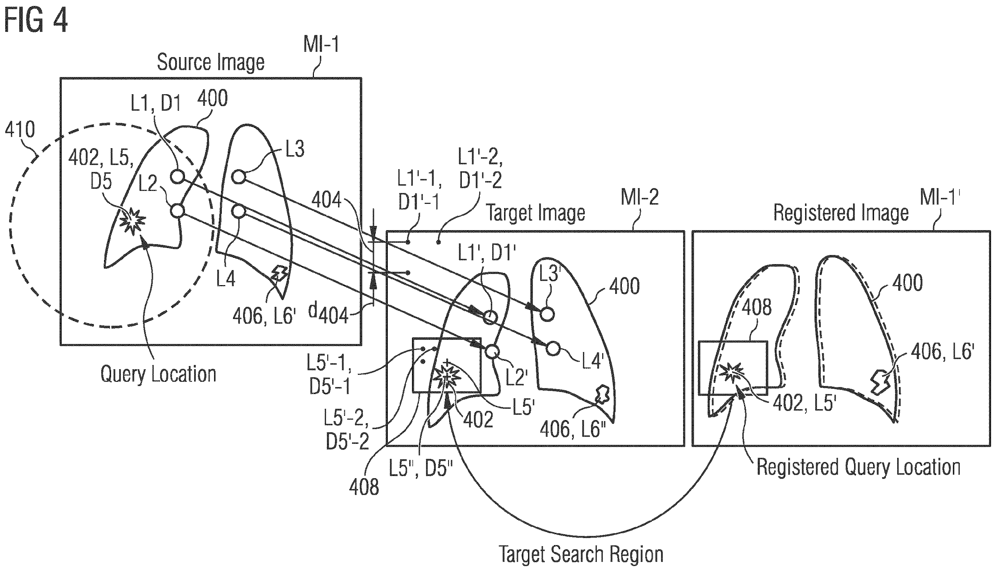

FIG. 3 illustrates a flowchart of an embodiment of a method for determining, in a second medical image, a location of a given feature present in a first medical image. FIG. 4 illustrates the first and second medical image, as well as the first image before and after registering the same to the target image.

In step S302 (FIG. 3) a first medical image MI-1 (FIG. 4 - also termed "source image" there) is received from the medical imaging unit 108, for example. The medical image MI-1 is, for example, a volumetric medical image and may be received in the data processing system 101 through the network interface 104 or the input unit 204.

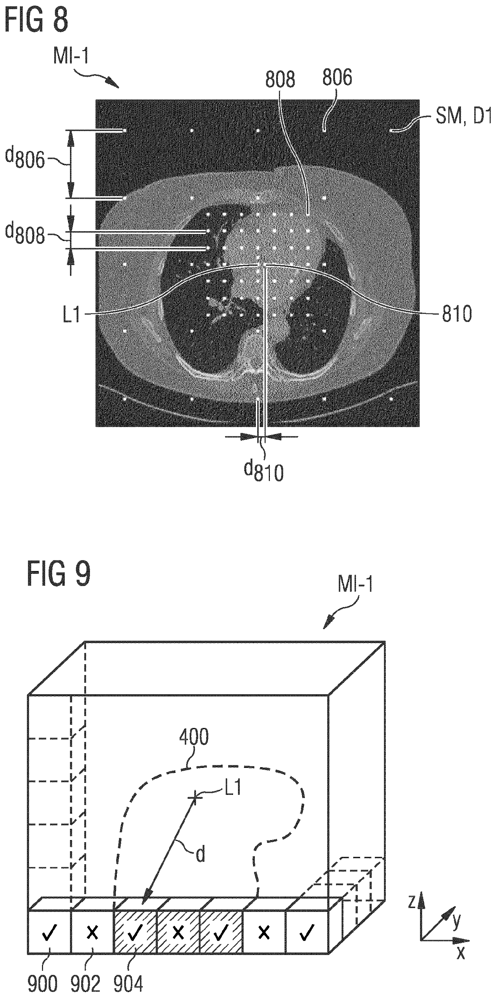

The medical image MI-1 as shown in FIG. 9 may be comprised of a three-dimensional array of voxels 900, 902, 904. This array is illustrated in FIG. 9 as a cuboid seen in a perspective view. The cuboid comprises rows and columns of voxel 900, 902, 904 extending in all three dimensions x, y, z. To make FIG. 9 more readable, only some of the voxels 900, 902, 904 within the cuboid are shown.

Instead of the three-dimensional array, the method explained herein may also use a number of slices (two-dimensional arrays of pixels) which, taken together, describe a (three-dimensional) volume, or may simply use a 2D image (two-dimensional arrays of pixels). In fact, any other data structure may be used comprising values, such as intensities (e.g., in a greyscale image), and describing a two- or three-dimensional space. Any such value is termed a "pixel" (2D) or "voxel" (3D) herein. The value may be combined with information describing its three-dimensional relationship with respect to other values, or the two- or three-dimensional relationship can be inferred from the data structure, or any other source.

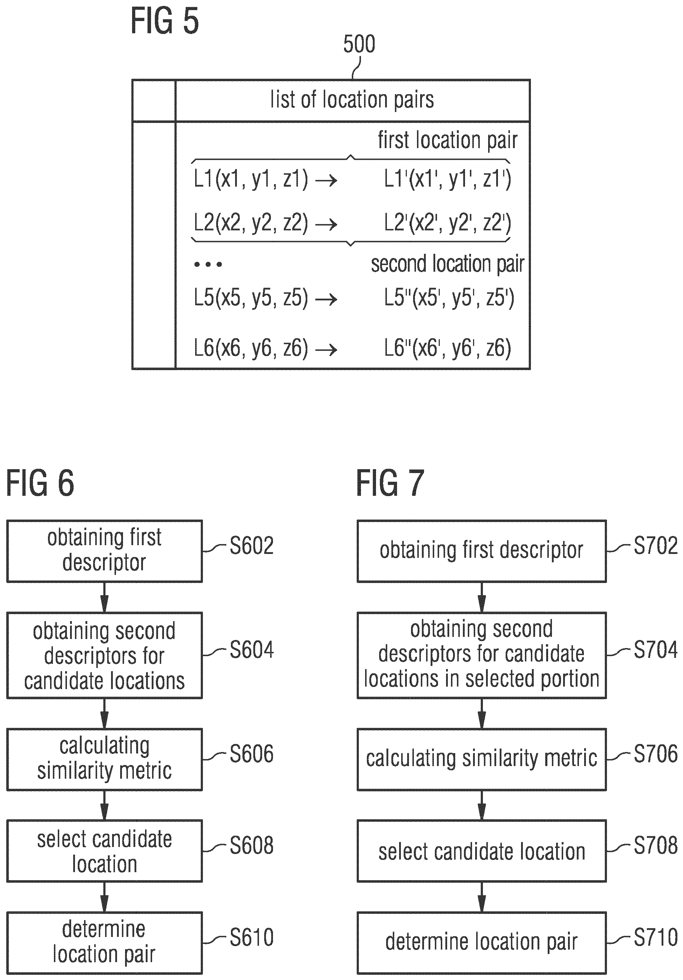

Returning to FIG. 4, it is shown that the first medical image MI-1 comprises, e.g., at least one organ or a portion thereof, for example lungs 400. In FIG. 9, the lungs 400 are represented by hashed voxels 904. Voxels 900, 902 represent other tissue. In both FIG. 4 and 5, the dashed line 400 represents a boundary between the lung tissue and the surrounding tissue.

In the first medical image MI-1 of FIG. 4, the left lung is affected by a tumor 402, which could also be a lesion, nodule or another abnormality - also more generally termed a feature herein. The first medical image MI-1 represents a current or latest image taken of the patient's lungs 400. Typically, the physician needs to find out how the tumor 402 has progressed over time. To this end, the first medical image MI-1 needs to be compared, at least with regard to the region including the tumor 402, to prior medical images, for example to a second medical image MI-2 (FIG. 4 - also termed "target image" there) recorded some months earlier. For instance, the second medical image MI-2 is received in step S304 (FIG. 3) from the medical database 102.

Now, for the sake of comparing the first and second medical image MI-1, MI-2 at least in portions, they need to be registered with respect to each other. Image registration in medical imaging is the process of aligning multiple images, volumes, or surfaces to a common coordinate system. This alignment allows for better comparison and analysis of images taken at different times, from different angles, or using different imaging modalities. There are two main types of image registration: Rigid registration which involves translating and rotating one image with respect to another, and non-rigid registration which involves deforming one image to match another more closely, often using additional constraints. Both types of registration, also in combination, may be implemented with the methods as described herein.

Registration according to the present embodiment entails, in step S305 (FIG. 3), determining - as illustrated in FIG. 4 - location pairs L1, L1' to L4, L4' of corresponding locations in the first and second medical image MI-1, MI-2.

Locations L1 to L4 shown in FIG. 4 are locations within the first medical image MI-1, each being defined by coordinates x1, y1, z3, x2, y2, z2, etc. (as illustrated in FIG. 5) with respect to the coordinate system associated with the (volumetric) first medical image MI-1. The coordinates x1, y1, z3, x2, y2, z2, etc. may, respectively, correspond to a specific voxel in the cuboid of FIG. 9. In case of a 2D image, coordinates x1, y1, x2, y2, etc. will be sufficient, designating a specific pixel, for example.

The locations L1 to L4 may be selected in accordance with a predefined pattern. Preferably, at least four locations L1 to L4 are matched in the first and second medical image MI-1, MI-2 as this will allow a fully defined registration (also in terms of image rotation as the corresponding 4x4 matrix which is solved in step S306 below has a unique solution). For example, the at least four locations L1 to L4 are selected around a center of the first medical image MI-1. Choosing these initial matching points may be done automatically by a corresponding algorithm. It is particularly preferred to use 2x2x2 or 3x3x3 locations, respective locations being arranged on the grid lines of a cuboid centered on the first medical image MI-1.

The corresponding locations L1' to L4' in the second medical image MI-2 are defined by coordinates x1', y1', z3', x2', y2', z2', etc. (as illustrated in FIG. 5) with respect to the coordinate system associated with the second medical image MI-2. The corresponding locations L1' to L4' (or more or less locations depending on the locations chosen in the first medical image MI-1 as described in the previous paragraph) are found using, in principle, known techniques such as point matching (described in US 2023/0005136 A1, for example), human atlas (described in US 2024/0363230 A1, for example) or any other suitable method.

Point matching is described in FIG. 6 and 8 of the present application. Generally speaking, any method may be used which compares, for each potential location pair L1, L1' to L4, L4' in the first and second medical image MI-1, MI-2, similarities between pixels or voxels at respective locations. In particular, a similarity metric is calculated, indicating a degree of similarity of voxel or pixel values (e.g., representing intensities, grey scale, etc.). In detail, the method may be embodied as explained below:
In step S602 (FIG. 6), a first descriptor D1 (FIG. 8) is extracted, at the (first) location L1, from the first medical image MI-1 in accordance with a sampling model SM (e.g., an algorithm). The sampling model SM defines which voxels are sampled and which are not. The module 103 may comprise the sampling model SM. Alternatively, the sampling method may be defined by the user via the input unit 204 or supplied via the network interface 104.

To this end, it may be provided that voxels 900, 904 are sampled from the first medical image MI-1. For example, the module 103 (FIG. 2) reads voxels 900, 904 from the first medical image MI-1 contained in the medical database 102. At least one voxel 902 may be skipped between two sampled voxels 900, 904. In FIG. 9, the sampled voxels are designated with a tick, whereas skipped or not sampled voxels are designated with a cross. In the embodiment of FIG. 9, in the row of voxels defined by adjacent voxels 900, 902, 904 only every second voxel 900, 904 is sampled. The voxels 900, 904 may be sampled sequentially or in parallel.

In embodiments of step S306, the voxels 900, 904 are sampled in a sparse manner. That is to say that the number of voxels sampled in the first medical image MI-1 to determine D1 is less than the total number of voxels contained in the medical image. In particular, the number of sampled voxels may be less than 50%, less than 20% or less than 10% of the total number of voxels in the first medical image MI-1 to be considered sparse. In one embodiment, the sampled voxels 900, 904 are less than 1%, preferably less than 0.1% and more preferably less than 0.01% of the total number of voxels in the volumetric first medical image MI-1.

Alternatively, or additionally, the voxels may be sampled in a random manner. For example, a random number generator or pseudonumber random generator may be used to identify voxels 900, 904 in the volumetric first medical image MI-1 which are to be sampled and others which are not sampled.

In particular, it may be beneficial if the voxels 900, 904 are sampled in step S306 with a sampling rate per unit length, area or volume which decreases with a distance d (FIG. 9) from the location L1. It was found that results improve even more, when the sampling rate decreases at a nonlinear rate, in particular at the rate of an exponential, logarithmic or power function. This approach is shown in FIG. 8 using hierarchical sparse sampling. It is "hierarchical" as sampling points are arranged on two or more, in this case three 3D-grids 806, 808, 810 with different grid spacings (distance between nodes each associated with a sampling point) d₈₀₆, d₈₀₈, d₈₁₀. The 3D grids may be nested inside each other as shown in FIG. 8, with the location L1 at their respective center. For example, the 3D grids are chosen with the same or a different number of sampling points each, for example 2x2x2, 5x5x5, 7x7x7 sampling points 900, 904. The grid spacing d₈₀₆ may equal 8 mm, d₈₀₈ may equal 3mm and d₈₁₀ may equal 0.5 mm, for example. This kind of sampling balances global and local image data context.

The sampled voxels 900, 902 are collectively referred to as the descriptor D1. In other cases, the descriptor D1 may simply be obtained by sampling a sub volume (not shown) of the first medical image MI-1 centered on the location L1, for example.

In step S604 (FIG. 6), second descriptors D1'-1, D1'-2, D1', etc. (FIG. 4) are sampled for a number of candidate second locations L1'-1, L1'-2, L1', etc. in the second medical image MI-2. Each descriptor D1'-1, D1'-2, D1', etc. may be centered on the respective candidate second locations L1'-1, L1'-2, L1', etc. Second candidate locations L1'-1, L1'-2, L1', etc. may be selected according to a predefined pattern, for example on grid nodes of a grid having a spacing d₄₀₄ of, e.g., 12 mm in x, y and z. This grid may span the entire second medical image MI-2. Sampling of the second descriptors D1'-1, D1'-2, D1', etc. is analogous to the sampling of the first descriptor D1.

In step S606 (FIG. 6), similarity metrics are calculated between the second descriptor D1'-1, D1'-2, D1', etc. (FIG. 4) at each candidate second location L1'-1, L1'-2, L1', etc. in the second medical image MI-1 and the first descriptor D1 at the first location L1 in the first medical image MI-1, the similarity metrics indicating a degree of similarity of voxel values (e.g., representing intensities, grey scale, etc.) in this case.

In step S608 (FIG. 6), it is found that the second descriptor D1' (FIG. 4) at the candidate second location L1' is most similar to the first descriptor D1 at the first location L1. For this reason, the module 103 decides in step S610 that a (first) location pair is made up of the locations L1 and L1'. The location pair L1, L1' is added to a list 500 (FIG. 5), being a list of location pairs saved in memory 202 (FIG. 2), for example.

Steps S602 to S610 are, preferably, repeated at least for another three locations L2 to L4 to obtain locations pairs L1, L1' to L4, L4' which are added to the list 500.

Now, returning to FIG. 3, a transformation is determined based on the location pairs L1, L1' to L4, L4'. For example, a first vector *p₁* comprising values L1 to L4 and a second vector *p₂* comprising values L1' to L4' can be defined. Then, the module 103 solves the least square regression problem in below equation (1) to determine the (initial) transformation - in this case a transformation matrix *W*. ${Wp}_{1} \approx {p}_{2}$ (1)

The transformation matrix *W* may be considered a rigid (linear) registration. However, in other embodiments, a non-rigid transformation, such as a spline function may be used.

In step S308 (FIG. 3), the location L5 (FIG. 4) of at least a first feature such as the tumor 402 or other finding is received. In one embodiment, the feature is automatically identified in the first medical image MI-1, e.g., by a use of any suitable image recognition algorithm (e.g., segmentation, classification), employing neural networks, etc. (e.g., US 12,205,706 B2). In another embodiment, the feature, i.e., its location L5, may be selected by a user, for example a radiologist, through a graphical user interface (GUI) using a pointer device. The GUI may be a screen 110 (FIG. 1) of the client device 107A. The pointer device may be a mouse connected to the client device 107A. The screen 110 may display the first medical image MI-1 or portions thereof and a cursor controlled by the mouse. In yet another embodiment, the feature, i.e., its location L5, may be received, for example, via the network interface 104 or the input unit 204 (FIG. 2).

Now, in step S310 (FIG. 3), the transformation (e.g., the transformation matrix *W*) is applied to at least the location L5 (FIG. 4) in the first medical image MI-1 to obtain a corresponding location L5' in the second medical image MI-2. By the same token, a location L6 of a second feature, i.e., a finding 406, may be received, and the corresponding location L6' calculated. This may be repeated for any number of features. One advantage of this embodiment is speed. The initial cost of defining multiple point pairs L1, L1' etc. is relatively high. However, afterwards the search operation is quick for subsequent locations since no whole images need to be searched.

According to an embodiment, not all the location pairs L1, L1' to L4, L4' are used in determining the transformation. Rather, the location pairs used to said end are selected based on the location of the relevant feature. For example, in regard to the tumor 402, only the locations L1, L2 closest to it are considered for the determination of the transformation (i.e., transformation matrix *W*). In one embodiment, a sub volume 410 centered on the location L5 of the tumor 402 is defined and only those other locations falling within said sub volume are considered for the transformation - in the example, locations L1, L2. Thus, transformations may be computed dynamically based on the query point, choosing the most relevant point.

However, according to a further embodiment, the method continues in step S312 (without yet determining the corresponding location L6' of the second feature 406) and the module 103 selects a portion 408 from the second medical image MI-2. This portion 408 can be a 2-D array or a (3D) sub volume (such as in the present case). This selection of the portion 408 is made depending on the corresponding location L5' as it can be readily assumed that L5' is already a good estimate. For example, the sub volume 408 can be selected to be centered on the location L5' in the second medical image MI-2.

In step S314, preferably, a technique such as point matching is used to refine the search for the location corresponding to the location L5 in the first medical image MI-1. This is illustrated in FIG. 7.

In step S702, a first descriptor D5 (FIG. 4) at the location L5 in the first medical image MI-1 is obtained.

In step S704, candidate locations L5'-1, L5'-2, L5", etc. (FIG. 4) in the sub volume 408 are determined. These may correspond to nodes of a 3D grid as indicated in FIG. 4 and explained above for L1'-1, L1'-2, which explanations apply analogously. Then, second descriptors D5'-1, D5'-2, D5", etc. are extracted from the second medical image MI-2. In particular, all explanations and features explained in regard to how suitable descriptors may be obtained apply analogously.

In step S706, a similarity metric (based on intensity values etc., for example - see above explanations) is calculated for each second descriptor D5'-1, D5'-2, D5" and, in step S708, the first descriptor D5, and, in this example, the location L5" is chosen as being associated with the most similar descriptor D5". Thus, the location pair L5, L5" is added to the list 500 (FIG. 5) as a refined location (step S710).

In step S316 (FIG. 3), the transformation, e.g., the transformation matrix W, is updated based on the newly found location pair L5, L5". I.e., a new solution is calculated to the array *p₁* now including the location L5 in addition to the locations L1 to L4 and the array *p₂* now including the corresponding location L5" in addition to the corresponding locations L1' to L4'.

The method now reverts in step S318 to step S310 and the updated transformation is applied to location L6 to provide the corresponding location L6' which tends to provide better a match compared to only applying the transformation determined in step S306. Now, steps S312 to S316 are repeated for the second feature 406 to provide the refined location L6", and, if the location of a third feature (not shown) is to be determined, a further updated transformation may be used. One advantage here is the robustness since the (updated) transformation does not allow gross errors as compared to independent point matchings. Additionally, since the orientation is handled with rigid (or non-rigid) registration it reduces the errors due to rotation differences between images. Also, the (updated) transformation becomes more accurate over time.

In one embodiment, the transformation, e.g., the transformation matrix *W*, determined in Step S306 is immediately applied to the entire first medical image MI-1 to obtain a registered first medical image MI-1' ("registered image" in FIG. 4 on the right). This may be advantage in that, when a feature location L5 is received at step S308, the corresponding location L5' can be immediately given and does not need to be calculated. This may reduce the rotation sensitivity in step S312 as extracted descriptors of the first and second medical image MI-1, MI-2 are more likely to match, also rotation-wise.

Even though it has been described that the first medical image MI-1 is mapped to the second medical image MI-2, the method could be implemented to work the other way around. Also, the above-described steps could be performed in a different order. E.g., step S308 may be executed between steps S304 and S305, and the method only proceeds to step S305 if a finding is identified.

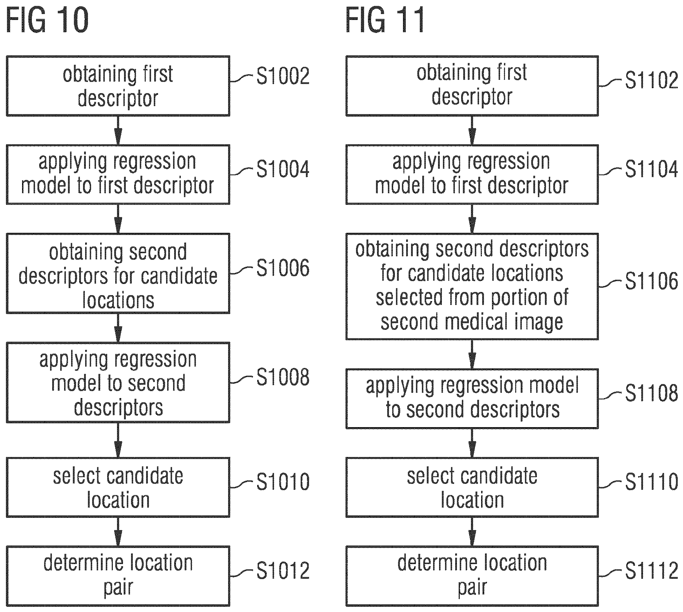

FIG. 10 to 12 illustrate an alternative to point matching as used in the above method, namely human atlas.

Steps S1002 to S1012 (FIG. 10) described hereinafter may be used in step S305 to determine the location pairs L1, L1' to L4, L4'.

First (step S1002), a first descriptor D1 is obtained from the first medical image MI-1 at location L1. In regard to how the descriptor is obtained, there is no difference with respect to step S602.

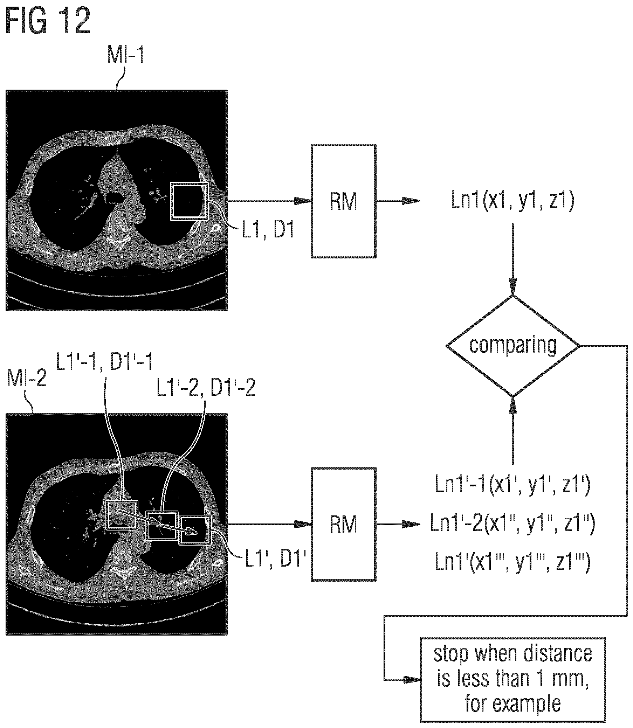

In step S1004 (FIG. 10), a regression model RM (FIG. 12) is applied to the first descriptor D1 to obtain a normalized location Ln1. This normalized location refers to a reference coordinate system (not shown). This reference coordinate system can be referred to as a human atlas. The human atlas is comprised of one or more images which are used as a reference, wherein each pixel, voxel or predetermined sub volume is associated with x, y, z-coordinates in the reference coordinate system. The regression model RM is configured (and in the case where the regression model is implemented as a neural network, trained) to output, for a specific descriptor as an input, 2D or 3D coordinates. Training of the regression model RM may have taken place prior to step S302 and using the point matching technique, for example.

In step S1006 (FIG. 10), second descriptors D1'-1, D1'2, D1', etc. (FIG. 4) are obtained for a plurality of locations L1'-1, L1'-2, L1', etc. in the second medical image MI-2. The second descriptors D1'-1, D1'2, D1', etc. may be extracted according to a predefined pattern (with locations L1'-1, L1'-2, L1', etc. chosen accordingly) from the second medical image MI-2. For example D1'-1 is extracted from the center, and further second descriptors D1'2, D1' are extracted moving outwards.

In step S1008 (FIG. 10), the regression model RM is applied to every descriptor D1'-1, D1'2, D1', etc. and corresponding normalized candidate locations Ln1'-1, Ln1'-2, Ln1', etc. are output.

In step S1010 (FIG. 10), the normalized candidate location Ln1' closest to the normalized location Ln1 in the first medical image MI-1 is selected. Accordingly, in step S1012 the location pair L1, L1' is determined as a location pair and is added to the list 500 (FIG. 5).

In one alternative embodiment, in steps S1006 and S1008 initially only one first descriptor D1'-1 (and not a plurality of the descriptors) is extracted and, after applying the regression model RM to the first descriptor D1'-1, the corresponding normalized location Ln1'-1 is output. Then, the distance between the corresponding normalized location Ln1'-1 and the normalized location Ln1 is calculated by an algorithm (representing one embodiment of comparing normalized locations Ln1'-1 with Ln1). If the distance is below a threshold, e.g., 1 mm, then the procedure stops and the location pair is determined in step S1012 as L1, L1'-1 (step S1010 is, preferably, not present in this embodiment). If the calculated distance is equal or larger than the threshold, then the procedure continues and the second descriptor D1'-2 is extracted, and the method steps above are repeated. The second location L1'-2 at which the second descriptor D1'-2 is extracted is, for example, estimated based on the first location L1'-1 of the first descriptor D1'-1, and, for further iterations, more than one or all of the previous descriptor's locations as well as based on one or more calculated distances.

Once location pairs L1, L1' to L4, L4' have been determined in this manner, the method proceeds to step S306 et seq.

Analogously, in step S314 (FIG. 3), the human atlas method as described above may be used to determine the refined location(s) L5" (FIG. 4) within the selected portion (volume 408). To this end, the locations L5'1, L5'-2, L5" etc. are analyzed to determine corresponding normalized locations. Of course, analogously, analysis can begin with only one first location and continue if a specific threshold is not met.

Steps S302 to S318, S602 to S610, S702 to S710, S1002 to S1012 and S1102 to S1112 may be executed in a partially or fully automated fashion by the module 103. Specifically, point matching (FIG. 6 and 7) may be combined with human atlas (FIG. 10 and 11).

Although the present invention has been described in accordance with preferred embodiments, it is obvious for the person skilled in the art that modifications are possible in all embodiments.

### REFERENCE NUMERALS

- 100: system
- 101: computer-implemented device
- 102: medical database
- 103: module
- 104: network interface
- 105: network
- 107A - 107N: client device
- 108: medical imaging unit
- 110: screen
- 201: processing unit
- 202: memory
- 203: storage unit
- 204: input unit
- 205: bus
- 206: output unit
- 400: lungs
- 402: tumor
- 406: feature
- 408: sub volume
- 410: sub volume
- 500: list
- 806, 808, 810: grids
- 900, 902, 904: voxels

- d: distance
- d₄₀₄: grid spacing
- d₈₀₆, d₈₀₈, d₈₁₀: grid spacing
- D1-D5": descriptors
- D1'-1, D1'-2: descriptors
- L1-L6': first locations
- L1'-1, L1'2: locations
- L5", L6": refined locations
- Ln1-Ln1'-2: normalized locations
- MI-1: first medical image
- MI-1': registered first medical image
- MI-2: second medical image
- SM: sampling model
- S302...S1102: method steps
- RM: regression model
- x, y, z: coordinates
- x1, y1, z1: coordinates
- x1', y1', z1': coordinates
- x1", y1", z1": coordinates
- x1‴, y1‴, z1‴: coordinates

## Claims

1. A computer-implemented method for determining, in a second medical image (MI-2), a location (L5', L5", L6', L6") of a given feature (402, 406) present in a first medical image (MI-1), the method comprising the steps:
a) determining (S305) location pairs (L1, L1'-L4, L4') of corresponding locations in the first and second medical image (MI-1, MI-2);
b) determining (S306) a transformation based on the location pairs (L1, L1'-L4, L4');
c) determining (S310), in the second medical image (MI-2), the location (L5', L6') of the given feature (402, 406) by applying the transformation to a location (L5, L6) of the given feature (402, 406) in the first medical image (MI-1).

2. The method according to claim 1, comprising:
d) selecting (S312) a portion (408) of the second medical image (MI-2) based on the location (L5') determined in step c); and
e) determining (S314) a refined location pair (L5, L5") based on the selected portion (408).

3. The method according to claim 2, wherein the transformation is updated (S316) based on the refined location pair (L5, L5"), and wherein step c) is repeated (S318) based on the updated transformation.

4. The method according to one of claims 1 to 3, wherein:
in step a), a similarity metric is calculated (S606) for determining each location pair (L1, L1'-L4, L4'), and/or
in step d) a similarity metric is calculated (S706) for determining the refined location pair (L5, L5").

5. The method according to one of claims 1 to 4, wherein step a) comprises, for each location pair (L1, L1'-L4, L4'), performing the steps:
obtaining (S602) a first descriptor (D1) for a first location (L1) in one of the first or second medical image (MI-1);
obtaining (S604) a second descriptor (D1'-1, D1'-2, D1') for each of a plurality of candidate locations (L1'-1, L1'-2, L1') in the other of the first or second medical image (MI-2);
calculating (S606), for each candidate location (L1'-1, L1'-2, L1'), a similarity metric between each second descriptor (D1'-1, D1'-2, D1') and the first descriptor (D1);
selecting (S608) a candidate location (D1') based on the calculated similarity metrics; and
determining (S610) a location pair (L1, L1') based on the first location (L1) and the selected candidate location (L1').

6. The method according to one of claims 2 to 5, wherein step d) comprises performing the steps:
obtaining (S702) a first descriptor (D5) for a first location (L5) in the first medical image (MI-1);
obtaining (S704) a second descriptor (D5'-1, D5'-2, D5") for each of a plurality of candidate locations (L5'-1, L5'-2, L5") in the second medical image (MI-2), each candidate location (L5'-1, L5'-2, L5") being selected from the portion (408) selected in step d);
calculating (S706), for each candidate location (L5'-1, L5'-2, L5"), a similarity metric between each second descriptor (D5'-1, D5'-2, D5") and the first descriptor (D5);
selecting (S708) a candidate location (D5") based on the calculated similarity metrics; and
determining (S710) the refined location pair (L5, L5") based on the first location (L5) and the selected candidate location (L5").

7. The method according to one of claims 1 to 6, wherein:
in step a), a regression model (RM) is used for determining (S1004, S1008) each location pair (L1, L1'-L4, L4'), and/or
in step d) a regression model (RM) is used for determining (S1104, S1108) the refined location pair (L5, L5").

8. The method according to one of claims 1 to 7, wherein step a) comprises, for each location pair (L1, L1'-L4, L4'), performing the steps:
obtaining (S1002) a first descriptor (D1) for a first location (L1) in one of the first or second medical image (MI-1);
applying (S1004) a regression model (RM) to the first descriptor (D1) to obtain a first normalized location (Ln1) referring to a reference coordinate system;
obtaining (S1006) a second descriptor (D1'-1, D1'-2, D1') for each of a plurality of candidate locations (L1'-1, L1'-2, L1') in the other of the first or second medical image (MI-2);
applying (S1008) a regression model (RM) to each second descriptor (D1'-1, D1'-2, D1') to obtain a respective second normalized location (Ln1'-1, Ln1'-2, Ln1') referring to the reference coordinate system;
selecting (S1010) a candidate location (L1') based on a comparison of the second normalized locations (Ln1'-1, Ln1'-2, Ln1') to the first normalized location (Ln1); and
determining (S1012) a location pair (L1, L1') based on the first location (L1) and the selected candidate location (L1').

9. The method according to one of claims 2 to 8, wherein step d) comprises performing the steps:
obtaining (S1102) a first descriptor (D5) for a first location (L5) in the first medical image (MI-1);
applying (S1104) a regression model (RM) to the first descriptor (D5) to obtain a first normalized location referring to a reference coordinate system;
obtaining (S1106) a second descriptor (D5'-1, D5'-2, D5") for each of a plurality of candidate locations (L5'-1, L5'-2, L5") in the second medical image (MI-2), each candidate location (L5'-1, L5'-2, L5") being selected from the portion (408) selected in step d);
applying (S1108) a regression model (RM) to each second descriptor (D5'-1, D5'-2, D5") to obtain a respective second normalized location referring to the reference coordinate system;
selecting (S1110) a candidate location (L5") based on a comparison of the second normalized locations to the first normalized location; and
determining (S1112) a location pair (L5, L5") based on the first location (L5) and the selected candidate location (L5").

10. The method according to one of claims 7 to 9, wherein the regression model (RM) is a trained neural network.

11. The method according to one of claims 1 to 10, wherein the transformation includes a linear transformation or a non-linear transformation, e.g., a spline function.

12. The method according to one of claims 1 to 11, wherein in step b):
location pairs (L1, L1', L2, L2') are selected (410) based on the location of the given feature (402); and
the transformation in step b) is determined based on the selected location pairs (L1, L1', L2, L2').

13. A computer-implemented device (101) for determining, in a second medical image (MI-2), a location (L5', L5", L6', L6") of a given feature (402, 406) present in a first medical image (MI-1), the computer-implemented device (101) comprising:
one or more processing units (201),
a receiving unit (204) which is configured to receive one or more medical images (MI-1, MI-2) captured by a medical imaging unit (108), and
a memory (202) coupled to the one or more processing units (201), the memory (202) comprising a module (103) configured to perform the method steps as claimed in any one of claims 1 to 12.

14. A system (100) for determining, in a second medical image (MI-2), a location (L5', L5", L6', L6") of a given feature (402, 406) present in a first medical image (MI-1), the system (100) comprising:
one or more servers (101),
a medical imaging unit (108) coupled to the one or more servers (101),
the one or more servers (101) comprising instructions, which when executed causes the one or more servers (101) to perform the method steps as claimed in any one of claims 1 to 12.

15. A computer program product comprising machine readable instructions, that when executed by one or more processing units (201), cause the one or more processing units (201) to perform the method steps according to claims 1 to 12.
